# EUROPÄISCHE PATENTSCHRIFT

(11) **EP 2 868 414 B1**
(45) Veröffentlichungstag und Bekanntmachung des Hinweises auf die Patenterteilung: **16.08.2017**
(21) Anmeldenummer: 14001177.6
(22) Anmeldetag: 29.03.2014
(51) Int. Cl.: B23D 15/00, B23Q 5/10

(54) **Schwenkvorrichtung für ein Schneidwerkzeug einer Bearbeitungsmaschine**
Pivoting device for a cutting tool of a processing machine
Dispositif de pivotement pour un outil de coupe d'une machine d'usinage

(30) Priorität: 04.11.2013 DE 102013018421
(43) Veröffentlichungstag der Anmeldung: 06.05.2015
(73) Patentinhaber: Schweikert GmbH, 74251 Lehrensteinsfeld (DE)
(72) Erfinder: Kell, Walter, D-74206 Bad Wimpfen (DE)
(74) Vertreter: Clemens, Gerhard

(56) Entgegenhaltungen:
- EP-A1- 2 596 890
- DE-A1- 19 845 599
- DE-A1-102009 020 383

## Beschreibung

### TECHNISCHES GEBIET

Die vorliegende Erfindung betrifft eine Schwenkvorrichtung für ein Schneidwerkzeug einer Bearbeitungsmaschine, gemäss dem Oberbegriff des Anspruchs 1. Eine solche Schwenkvorrichtung ist aus dem Dokument EP2596890A1 bekannt. Die vorliegende Erfindung betrifft weiterhin eine Bearbeitungsmaschine mit einer derartigen Schwenkvorrichtung, wobei der Drehantrieb als Linear-/Segmentmotor mit Primäreinheiten beziehungsweise Motoreinheit und Sekundäreinheiten beziehungsweise Magneteinheiten ausgebildet ist.

### STAND DER TECHNIK

Zum Herstellen von Platinen von einem Coil in einer Bearbeitungsmaschine, insbesondere Presse, die beispielsweise als Formplatinen als Vorprodukte bei der Automobileteileherstellung verwendet werden, muss das Schnittwerkzeug zwischen den Presshüben um einen Winkel geschwenkt werden, um eine gewünschte Platinenform zu erzielen. Dabei kommt eine Schwenkvorrichtung zwischen den Presseteilen zum Einsatz, auf der das Schnittwerkzeug angeordnet und um eine Stellachse verdrehbar ist.

Es ist bekannt zur Herstellung solcher Schräg- oder Schwenkschnitte am Schnittwerkzeug, dass auf einer Gleitvorrichtung ruht, die auf einer Grundplatte angeordnet ist, ein zur Stellachse konzentrisches, großdurchmessriges Zahnrad zu befestigen, das mit einem Zahnriemen in Eingriff steht. Außerhalb des Zahnradumfangs sind zwei diametral gegenüberliegende Servo-Drehantriebe für den Zahnriemen an der Grundplatte abgestützt. Die Servoantriebe stellen das Schnittwerkzeug auf den jeweils gewünschten Drehwinkel ein. Eine derartige Anlage ist relativ aufwendig und kostenintensiv und Verschleiß behaftet.

Bei einer weiteren bekannten Lösung greifen nahe den außenliegenden Enden des um eine zentrale Drehlager herum verdrehbaren Schnittwerkzeuges zwei Hydraulikzylinder an, die gegenseitig beaufschlagt werden und am Schnittwerkzeugunterteil angeschlossen sind. Aufgrund der Umsetzung der linearen Bewegung der Hydraulikzylinder in die Drehbewegung des Schnittwerkzeugs ergibt sich eine geringe Präzision bei der Positionierung und für die Verstellung ist relativ viel Zeit erforderlich. Die Taktzeiten sind daher relativ gering. Damit lassen sich die Pressen in der Regel nicht auslasten. Auch eine Umrüstung der Hydraulikzylinder auf verschiedene Schwenkwinkel ist sehr aufwendig.

In dem deutschen Gebrauchsmuster DE 297 03 482 ist eine Presse zum Herstellen von Formplatinen aus flächigen Material beschrieben, bei der ein Drehantrieb eingesetzt wird, der entweder in einem Presseteil oder im Schnittwerkzeug und zu einem zentralen Angriff am Schnittwerkzeug in etwa in der zentralen Stellachse angeordnet ist. Das Schnittwerkzeug wird dabei mit dem Drehantrieb um die vertikale Stellachse relativ zu seiner Grundplatte sowie zu weiteren Baugruppen der Presse verdreht. Der Drehantrieb selbst ist als hydromechanischer Schwenkmotor ausgestaltet, der sich unmittelbar in der Presse abstützt. Auch können andere mechanische oder elektrische Aggregate eingesetzt werden. Ein typisches Beispiel, für das derartige geschnittene Platinen benötigt werden, ist im Bereich der Automobilindustrie gegeben, wo aus einer Materialbahn Platinen ausgestanzt, die in weiteren Bearbeitungsschritten umgeformt werden.

Aus dem deutschen Gebrauchsmuster DE 20 2009 009 581 ist ein Antrieb für ein Schnittwerkzeug einer Bearbeitungsmaschine bekannt, bei dem der Antrieb als ein Torquemotor ausgestattet ist, der mit einer Schwenkplatte zur Aufnahme des Schnittwerkzeugs in Wirkverbindung steht, wobei der Torquemotor auf einer Grundplatte abgestützt ist und einen weitestgehend zylindrischen Querschnitt aufweist.

Es ist weiterhin bekannt, bei einer Schwenkvorrichtung als Antrieb zweit diametral gegenüberliegende Servomotoren einzusetzen, die ein Stirnrad aufweisen mit einem Kegelradgetriebe. Das Stirnrad greift in eine an der Schwenkvorrichtung angeordnete und mit dieser verbundene Drehzahnrad mit Außenverzahnung ein. Der Nachteil bei dieser Lösung ist das relativ große Flankenspiel in der Verzahnung, das es sich negativ auf die Positioniergenauigkeit auswirkt. Darüber hinaus unterliegen die Zahnrädern mit zunehmender Stanzzeit einem Verschleiß was sich ebenfalls negativ auf die Genauigkeit auswirkt. Zudem ist ein zusätzlichen Kegelrad erforderlich, was erhöhte Kosten bedeutet.

Eine weitere bekannte Ausführung zeichnet sich dadurch aus, dass diametral gegenüberliegende Servozylinder eingesetzt werden, wobei der Kolben an eine Zahnstange angeschlossen ist, die einem drehbaren Zahnkranz jeweils eingreift, wobei der Zahnkranz an der Schwenkvorrichtung befestigt ist. Bei dieser Lösung ist ein zusätzliches Hydraulikaggregat erforderlich. Ebenso wirkt sich das Flankenspiel in der Verzahnung als auch in der Zahnverschleiß negativ auf die Positioniergenauigkeit aus.

Eine weitere bekannte Lösung zeichnet sich dadurch aus, dass als Drehantrieb ein Torquemotor mit Planetengetriebe eingesetzt wird. Ein derartiger Motor weist eine hohe Drehsteifigkeit und eine große Kraftübertragung auf. Auch hier ist der Zahnverschleiß und das Flankenspiel nachteilig. Des Weiteren erfordert diese Konstruktion eine relativ große Bauhöhe.

Eine alternativ bekannte Lösung, die ebenfalls einen Torquemotor verwendet ist dadurch gekennzeichnet, dass der Torquemotor zentral in der Mitte des Schwenkvorrichtung angeordnet ist und direkt mit einem Drehzahnrad in Wirkverbindung steht, das an der Schwenkvorrichtung befestigt ist. Auch dieses System benötigt eine relativ große Bauhöhe und weist die Nachteile bezüglich Flankenspiel und Verschleiß auf. Weiterhin kann der Motor bei überhängender Masse leicht instabil werden. Zudem ist der Motor schwer zugängig. In der Regel ist auch eine Wasserkühlung erforderlich.

Eine dritte Variante mit Torquemotoren als Drehantrieb ist dadurch gekennzeichnet, dass ein Zahnkranz vorhanden ist, bei dem außenseitig gegenüberliegend jeweils zwei Torquemotoren in die Außenverzahnung des Zahnkranzes mit einer entsprechenden Gegenverzahnung eingreifen. Bei dieser Variante sind die Torquemotoren gut zugänglich. Der grundsätzliche Vorteil von Torquemotoren ist, dass sie wartungsfrei sind. Auch diese Lösung ist bezüglich des vorhandenen Flankenspiels und zunehmenden Zahnverschleißes bezüglich der Positioniergenauigkeit nicht optimal. Bei hohen Frequenzen wird eine Wasserkühlung benötigt. Auch dieses System erfordert eine relativ große Bauhöhe.

In der EP 2 596 890 A1 ist eine Vorrichtung zum Schneiden von dünnschichtigem Material, insbesondere von Metallbändern, Geweben, Kunststoffen, Papier, Karton, Verbundwerkstoffen oder dergleichen, das von Coils abgewickelt wird, beschrieben, wobei die Vorrichtung zwei sich mit ihren Schneiden gegenüberliegende und in einem Rahmen gelagerte Messer aufweist, von denen mindestens ein Messer in vertikaler Richtung zu dem anderen Messer hin verfahrbar ist und, wobei der Rahmen mit den Messern mittels eines in einem Grundrahmen der Vorrichtung angeordneten Drehantriebs um eine vertikale Achse aus seiner quer zur Laufrichtung des dünnschichtigen Materials verlaufenden Grundposition um einen bestimmten Winkel nach rechts und links schwenkbar ist. Der Drehantrieb für den Rahmen ist dabei getriebelos ausgebildet und weist einen permanentmagneterregten Synchronmotor auf, dessen Rotor direkt auf den Rahmen wirkt. Der Synchronmotor ist dabei stehend angeordnet. Derartige Vorrichtungen werden beispielsweise bei Anlagen zur Herstellung von Transformatorenkernen, die aus einer Vielzahl von abgestapelten Blechen gebildet sind, eingesetzt.

In der DE 10 2009 020 383 A1 ist eine Lagerungsanordnung für einen Maschinentisch beschrieben, die als Drehlager- oder Linearlager ausgeführt sein kann. Die Lagerungsanordnung umfasst einen Stator und einen relativ zu diesem beweglich gelagerten Läufer. Stator und Läufer weisen sich gegenüberstehende Kontaktflächen auf, zwischen denen ein mit Hydraulikflüssigkeit füllbarer Spalt ausgebildet ist. Zur Kühlung des Stators beziehungsweise der Statorwicklung ist ein Kühlkanal vorhanden, der mit dem Spalt und einem Hydraulikaggregat zu einem Kreislauf verbunden ist, durch welchen die Hydraulikflüssigkeit förderbar ist. Als mögliche Anwendungsfällen für eine derartige Lagerungsanordnung sind Werkzeug-, Textil- und Druckmaschinen, Sondermaschinen, Förderanlagen, Werkstückträgerumlaufsysteme, Nahrungsmittel-, Abfüll- und Verpackungsanlagen genannt.

Alle im Stand der Technik bekannten Lösungen sind bezüglich einer dauerhaft zuverlässigen Funktionalität mit hoher Positioniergenauigkeit und Taktzahl nicht zufriedenstellend. Insbesondere der zunehmende Verschleiß der Bauteile mit zunehmender Betriebsdauer bereitet bezüglich der Positioniergenauigkeit Probleme. Darüber hinaus weisen die bekannten Lösungen eine relativ große Bauhöhe auf.

### DARSTELLUNG DER ERFINDUNG

Ausgehend von dem genannten Stand der Technik liegt der vorliegenden Erfindung die Aufgabe beziehungsweise das technische Problem zugrunde, eine Schwenkvorrichtung der eingangs genannten Art anzugeben, die die im Stand der Technik genannten Nachteile vermeidet, wirtschaftlich hergestellt werden kann, eine dauerhaft zuverlässige Funktion bei hoher Positioniergenauigkeit und hohen Taktzahlen gewährleistet, die so ausgebildet ist, dass sie autark arbeitet, in bestehende Bearbeitungsmaschinen, wie Pressen, Maschinen oder Einrichtungen einsetzbar ist, ohne bestehende Mechaniken zu verändern.

Die erfindungsgemäße Schwenkvorrichtung für ein Schneidwerkzeug einer Bearbeitungsmaschine der eingangs genannten Art ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Eine erfindungsgemäße Bearbeitungsmaschine /-werkzeug /-anlage, wie Presse, Schneidanlage, Scherenanlage, zum Schneiden von anschließend zu bearbeitenden Platinen ist durch die Merkmale des unabhängigen Anspruchs 13 gegeben. Vorteilhafte Ausgestaltungen und Weiterbildungen sind Gegenstand der von dem unabhängigen Anspruch 13 direkt oder indirekt abhängigen Ansprüche.

Die erfindungsgemäße Schwenkvorrichtung zeichnet sich demgemäß dadurch aus, dass die Primär- und Sekundäreinheiten liegend angeordnet sind, die Primäreinheiten an der Grundplatteneinrichtung und die Sekundäreinheiten an dem Drehteller angeordnet sind, die Lagervorrichtung eine Axiallagereinrichtung und eine Radiallagereinrichtung aufweist, die Lagervorrichtung als hydrostatische Lagervorrichtung, als Gleitlagervorrichtung oder als Lagervorrichtung mit Wälz-/Kugellagerbauteilen oder eine Kombination der genannten Varianten ausgebildet ist, wobei eine gefederte Hubeinrichtung vorhanden ist, die die Axiallagereinrichtung während des Schwenkvorgangs anhebt und nach dem Schwenkvorgang, das heißt beim Schneidvorgang, auf einer festen Unterlage absetzt.

Die liegende Anordnung ermöglicht, eine geringe Bauhöhe umzusetzen, ohne dass die dauerhaft zuverlässige Funktionalität darunter leidet.

Mit einer derartigen Schwenkvorrichtung lassen sich gemäß einer bevorzugten Ausgestaltung der erfindungsgemäßen Schwenkvorrichtung Bauhöhen umsetzen, die kleiner als 200 mm sind.

Hinsichtlich einer optimalen Funktionalität ist es besonders vorteilhaft, die Schwenkvorrichtung derart auszubilden, dass die Schwenkvorrichtung um eine vertikale Schwenkachse drehbar ausgebildet ist und die Schwenkachse im Wesentlichen in der Schwenkachse des Schneidwerkzeugs angeordnet ist.

Dadurch wird eine dauerhaft zuverlässige Funktionalität, bei hohen Taktzahlen und hoher Positionsgenauigkeit gewährleistet.

Bevorzugt sind Dichteinheiten für die Axial- und/oder Radiallagereinrichtungen vorhanden.

Die Dichteinheiten können bevorzugt als berühungslose Labyrinth-Dichteinrichtungen ausgebildet sein, die die Abdichtung der Axial-und/oder Radiallagereinrichtungen zuverlässig gewährleistet.

Bei der Ausbildung als hydrostatische Lagervorrichtung ist es besonders vorteilhaft, einen PM-Regler (Progressiv Mengen -Regler) einzusetzen, der den hydrostatischen Spalt zwischen Axial-/ Radiallagereinrichtung und Drehteller konstant hält.

Gemäß einer besonders vorteilhaften Ausgestaltung liegt der Schwenkwinkel der Schwenkvorrichtung im Bereich von ± 40° oder kleiner, was den in der Praxis erforderlichen Schwenkwinkelbereich zur Herstellung von Platinen vollständig abdeckt.

Durch eine besonders vorteilhafte Bauweise ist es auch problemlos möglich im 360° Betrieb zu arbeiten. Dadurch wird die Schwenkvorrichtung quasi als Rundachse (zum Beispiel Rundtisch) eingesetzt.

Eine besonders vorteilhafte Ausgestaltung, die bezüglich der Maßgenauigkeit der hergestellten ausgestanzten Platinen eine besonders hohe Zuverlässigkeit aufweist, zeichnet sich dadurch aus, dass die Schwenkvorrichtung eine Messeinrichtung aufweist, die die Drehposition des Drehtellers relativ zur Grundplatteneinrichtung und damit die Drehposition des Schneidwerkzeugs detektiert und ihre Signale mit der Steuereinrichtung kommuniziert.

Um eine dauerhaft zuverlässige Funktion mit hoher Positioniergenauigkeit auch bei hohen Taktzahlen zu gewährleisten, zeichnet sich eine besonders vorteilhafte Ausgestaltung dadurch aus, dass eine Kühleinrichtung, insbesondere Wasserkühlereinrichtung, für die Primäreinheiten vorhanden ist.

Aufgrund des gewählten erfindungsgemäßen Drehantriebs mit Segmentmotoren lassen sich problemlos Schwenkvorrichtungen umsetzen, die eine Bauhöhe von 200 mm oder kleiner aufweisen.

Auch die Umsetzung von Schwenkfrequenzen, gemäß einer besonders bevorzugten Ausgestaltung, die mindestens 60 Hz bei ± 35° oder kleiner oder größer betragen, ist problemlos möglich. Die Frequenz wird auch von der Größe des Schwenkwinkels beieinflusst. Eine besonders vorteilhafte Ausgestaltung, die auch einen wesentlichen Erfindungsgedanken in sich trägt, zeichnet sich dadurch aus, dass die Schwenkvorrichtung als autarke Einheit ausgebildet ist, die an einer bestehenden Bearbeitungsmaschine nachrüstbar, das heißt in einfacher Art und Weise schnell und ohne großen Arbeits- und Zeitaufwand montier- und demontierbar, ausgebildet ist.

In diesem Zusammenhang ist eine besonders vorteilhafte Ausgestaltung dadurch gekennzeichnet, dass die Schwenkvorrichtung über zumindest eine lösbare Verbindungseinheit mit der Steuereinrichtung und/oder Energieversorgungseinrichtung der Bearbeitungsmaschine kommunizierbar beziehungsweise verbindbar ausgebildet ist. Die Verbindungseinrichtung kann bevorzugt als Steckverbindung ausgebildet sein.

Durch die innovative Antriebslösung gemäß der Erfindung zum Schwenken einer Schwenkvorrichtung eröffnen sich neue Einsatzmöglichkeiten und wirtschaftliche Umsetzungen bezüglich der Herstellung von Platinen. Die Schwenkvorrichtung arbeitet komplett autark ohne dass sie die bestehende Mechanik von vorhandenen Pressen, Maschinen oder Einrichtungen verändert. Dadurch ist eine Nachrüstung problemlos möglich, was besonders wirtschaftlich ist, da bestehende Anlagen bei Bedarf ohne großen Aufwand temporär auf eine geforderte Schnittlösung von Materialbahnen oder vom Coil zur Herstellung von Platinen umgerüstet werden kann.

Die erfindungsgemäße Schwenkvorrichtung arbeitet hochdynamisch, ist sehr antriebsstark und weist eine hohe Energieeffizienz auf.

Sie zeichnet sich durch eine besonders hohe Präzision bei der Positionierung des Schnittwerkzeugs auch unter Dauerbelastung und kurzen Taktzeiten aus. Durch den Einsatz von Segmentmotoren, einer hydrostatischen Lagerung und einem berührungslosen Messsystem ist die Vorrichtung wartungsfrei bezüglich dieser Bauteile und unterliegt keinem Verschleiß.

Die erfindungsgemäße Schwenkvorrichtung zeichnet sich durch eine einfache Bauweise aus und kann erfindungsgemäß in besonders vorteilhafter Art und Weise als autark arbeitende Einheit ausgebildet sein, mit denen bestehende Anlagen in einfacher Art und Weise bei Bedarf nachgerüstet werden können, das heißt die Schwenkvorrichtung bei Bedarf mit relativ einfachen Montagemaßnahmen nachgerüstet werden kann und anschließend wieder demontiert werden kann. Die Einfachheit der Montage bzw. Demontage bei bestehenden Anlagen wird weiterhin dadurch in vorteilhafter Art und Weise unterstützt, dass die Steuerung und Stromversorgung der Schwenkvorrichtung steckbar mit der bestehenden Anlage ausgebildet ist, so dass die Steuerung der Schwenkvorrichtung in einfacher Art und Weise mit der übergeordneten Steuerung der Bearbeitungsanlage beziehungsweise Maschine in Kommunikationsverbindung bringbar ist.

Dadurch, dass die erfindungsgemäße Schwenkvorrichtung ein integriertes Messsystem aufweist, ist eine hohe Präzisionspositionierung der Schwenkvorrichtung dauerhaft zuverlässig gewährleistet.

Mit der erfindungsgemäßen Schwenkvorrichtung ist es problemlos möglich, herkömmliche oder speziell angefertigte Schneidwerkzeuge, Scheren, Automatisierungseinrichtungen, Schneidanlagen, Bandanlagen mit Scheren, Pressen mechanisch und hydraulisch durch einfache Art und Weise, ohne die Mechanik der einzelnen Maschinen, Werkzeuge oder Einrichtungen zu verändern, bei Bedarf nachzurüsten, das heißt bei Bedarf innerhalb der Anlage zu montieren und bei Nichtbedarf in einfacher Art und Weise wieder zu demontieren. Dadurch können bisher starre nur auf eine Produktpalette festgelegte Anlagen, in vorteilhafter Art und Weise flexibilisiert werden.

Somit können auf einer Anlage oder Maschine durch die erfindungsgemäße Schwenkvorrichtung nicht nur einfache Rechteckplatinen - wie bisher möglich -, sondern gleichschenklige Trapezbleche, ungleichschenklige Trapezbleche, Rautenformplatinen oder Bogenschnitte, wie sie beispielsweise für die Automobil- und Zulieferindustrie benötigt werden, hergestellt werden.

Der eingesetzte Segmentmotor wird erfindungsgemäß auf die Schwenkvorrichtung unter Berücksichtigung der vorgegebenen technischen Daten und des daraus resultierenden Massenträgheitsmomentes, der Optimierung der Segmente zur Leistung- und Kostenreduzierung abgestimmt.

Wie oben erwähnt, zeichnet sich eine vorteilhafte Ausgestaltung der erfindungsgemäßen Schwenkvorrichtung dadurch aus, dass die Primärteile (Motor) auf der Grundplatte stehend aufgebaut sind. Die Sekundärteile (Magnete) werden mit der Lagerung und einem Rotorring kombiniert. Dabei kann der Segmentmotor als Innen- oder Außenläufer eingesetzt werden. Bevorzugt werden die einzelnen Primärteile durch eine Kühlanlage, insbesondere Wasser-Rückkühlanlage, gekühlt.

Eine weitere alternative Ausgestaltung zeichnet sich dadurch aus, dass die Primärteile (Motor) auf der Grundplatte liegend aufgebaut sind. Der Kabelanschluss kann innen oder außen liegend sein. Die Sekundärteile (Magnete) werden direkt unter dem Drehteller befestigt.

Diese Bauweise hat den Vorteil, dass sie eine noch geringere Bauhöhe ermöglicht. Auch hier ist bevorzugt der Einsatz einer Kühleinrichtung möglich.

Eine besonders bevorzugte Ausgestaltung der erfindungsgemäßen Schwenkvorrichtung zeichnet sich dadurch aus, dass eine gefederte Hubeinrichtung vorhanden ist, die die Axiallagereinrichtung während des Schwenkvorgangs anhebt und nach dem Schwenkvorgang, das heißt beim Schneidvorgang, auf einer festen Unterlage absetzt.

Bei der Ausbildung der Axial-/ Radiallagereinrichtung als Wälz- oder Kugellager, insbesondere für den Einsatz bei mittleren Taktfrequenzen und Geschwindigkeiten, ist die gefedert Hubeinrichtung innerhalb der Motorlagerung gelagert und die Axial-/ Radiallagereinrichtung wird über Federn angehoben. Dadurch wird der Drehteller mit dem aufgebauten Schneidwerkzeug nach dem Schwenken nicht auf das Lager, sondern auf eine feste Unterlage abgesenkt. Dadurch entstehen zwei wesentliche Vorteile: Zum einen entstehen beim Schwenken gegenüber der Gleitlagerung kaum Reibungskräfte, dadurch muss nur die reine Masse beschleunigt und abgebremst werden, und zum anderen werden die Reaktivkräfte, die beim Schneiden auf den Antrieb wirken, durch Reibschluss verringert, so dass das Haltemoment des Antriebs reduziert wird.

Bei der Ausbildung der Lagervorrichtung als Gleitlager, die insbesondere bei niedrigen Taktfrequenzen und Geschwindigkeiten eingesetzt werden können, bestehen die Gleitlager aus unterschiedlichen Materialpaarungen. Sie werden automatisch oder manuell mengendosiert, beispielsweise durch ein Schmieraggregat, mit Gleitfett versorgt.

In einer dritten Ausführungsvariante ist die Axial-/ Radiallagereinrichtung als hydrostatische Lagerung ausgebildet, die insbesondere für hohe Taktfrequenzen und Geschwindigkeiten einsetzbar ist. Aufgrund der hohen dynamischen Belastung sind erfindungsgemäß Axial-/ Radialdichtungen vorhanden. Alternativ kann eine berühungslose Labyrinth-Dichtung vorhanden sein, wobei je nach Viskosität der eingesetzten Schmiermittel eventuell eine Saugpumpe zusätzlich erforderlich ist. Bevorzugt wird der hydrostatische Spalt bei dieser Lösung mittels eines PM-Reglers (Progressiv Mengen -Regler) konstant gehalten. Durch diese Regeltechnik wird auch eine sehr hohe Lagersteifigkeit erreicht, was bezüglich der geforderten Präzision Vorteile mit sich bringt.

Für besondere Anforderungen können auch die einzelnen Lagerausführungen - Gleitlager, Kugel- oder Rollenlager, hydrostatische Lager - untereinander kombiniert werden.

Erfindungsgemäß wird ein induktives, inkrementelles oder absolutes Winkelmesssystem für Innen- und Außenabtastung eingesetzt, das eine hohe Präzision gewährleistet. Das Messsystem ist trotz hoher Positioniergenauigkeit extrem robust gegenüber Umwelteinflüssen wie Staub, Feuchtigkeit usw. und weist eine extrem hohe Schock- und Vibrationsfestigkeit auf.

Bevorzugt ist die Elektrosteuerung der Schwenkvorrichtung mit einer speziell entwickelten Software, einem Produktdatenspeicher und einer Schnittstelle zu der übergeordneten Steuerung der Bearbeitungsanlage/ -maschine ausgestattet.

Die besonders vorteilhafte erfindungsgemäße Schwenkvorrichtung arbeitet vollkommen autark und besteht im Wesentlichen aus: Berührungslose und wartungsfrei arbeitende Segmentmotoren, die hochdynamisch und leistungsstark sind und eine geringe Bauhöhe aufweisen, wobei die Motoren über eine geschlossene Rückkühlanlage gekühlt werden. Mit der hydrostatischen Lagerung ist die Lagerung ebenfalls berühungslos und wartungsfrei ohne Kugeln und Rollen vorhanden, wobei die Lagertragkraft elektronisch in einfacher Art und Weise einstellbar ist. Bevorzugt ist das Messsystem direkt im Drehteller integriert, daher ist eine präzise Positionierung möglich. Das Messsystem ist robust gegen Umwelteinflüsse, wie Staub und Feuchtigkeit, und ist extrem schock- und vibrationssteif. Es lässt sich weiterhin eine bewährte Antriebssteuerung verwenden, die die geforderten Positioniergenauigkeiten, Taktzeiten, Schwenkwinkel und dergleichen problemlos umsetzt. Durch ein einfaches Stecksystem kommuniziert die Steuerung der Schwenkvorrichtung mit der übergeordneten Steuerung der jeweiligen Maschine. Bevorzugt wird ein Handbediengerät mit Display für alle benötigten Funktionen eingesetzt.

Die erfindungsgemäße Bearbeitungsmaschine /-werkzeug /-anlage, wie Presse, Schneidanlage, Scherenanlage, zum Schneiden von anschließend zu bearbeitenden Platinen aus einer zugeführten Materialbahn, mit Mitteln zum Zuführen beziehungsweise Abführen einer Materialbahn aus der die Platinen geschnitten werden, zeichnet sich dadurch aus, dass eine Schwenkvorrichtung der oben genannten Art vorhanden ist, auf der ein Schneidwerkzeug, insbesondere über eine Werkzeugaufnahme, zum Schneiden von Platinen aus der zugeführten Materialbahn vorhanden ist.

Dabei ist die Schwenkvorrichtung gemäß einer besonders vorteilhaften Ausgestaltung als autarke, lösbar an der Bearbeitungsmaschine montierbare und demontierbare Vorrichtung ausgebildet.

Zur Gewährleistung eines besonders einfachen Montage- beziehungsweise Demontagevorgangs weist die Schwenkverbindung oberseitig eine Werkzeugaufnahmeeinrichtung zum lösbaren Anschluss des Schneidwerkzeugs auf.

Um die Kommunikation mit der Bearbeitungsmaschine in einfacher Art und Weise zu gewährleisten, ohne das aufwendige Kommunikationsverbindungen geschaffen werden müssen, zeichnet sich eine besonders vorteilhafte Ausgestaltung dadurch aus, dass die Schwenkvorrichtung zumindest eine lösbar, insbesondere steckbare, Verbindungseinrichtung aufweist zum Herstellen einer Kommunikationsverbindung mit der übergeordneten Steuerung der Bearbeitungsmaschine und/oder der Energieversorgung der Bearbeitungsmaschine.

Dadurch, dass die erfindungsgemäße Schwenkvorrichtung einen Segmentantrieb aufweist, kann eine niedrige Bauweise bei großer Dynamik und Präzision realisiert werden, der insbesondere aufgrund seiner niedrigen Bauweise bei bestehenden Anlagen problemlos bedarfsweise montiert werden kann, ohne das besonders aufwendige Umbauarbeiten erforderlich sind. Der erfindungsgemäße eingesetzte Segmentmotor ist durch seine Bauart als großer direkter Antrieb in Segmentbauweise besonders gut geeignet, um die geforderten Vorgaben umzusetzen. Der Segmentmotor weist gegenüber den herkömmlichen Torquemotoren, insbesondere bei einem Durchmesser über 1 Meter, ein Höchstmaß an Wirtschaftlichkeit und Wartungsfreundlichkeit auf. Durch die besonders große Magnetdichte erfüllt der erfindungsgemäße Antrieb alle an ihn gestellten Forderungen und ist hochdynamisch, antriebsstark, energieeffizient, präzise in der Positionierung, wartungsarm und zeichnet sich durch eine besonders einfache Bauweise bei geringer Bauhöhe aus. Durch das integrierte berührungslose Messsystem ist eine hohe Positioniergenauigkeit mit dauerhaft zuverlässiger Funktion auch bei hohen Taktzahlen gewährleistet. Zudem ist durch die Verwendung eines Segmentmotors möglich eine erfindungsgemäße Schwenkvorrichtung zur Verfügung zu stellen, die vollkommen autark funktionsfähig ist und bei bestehenden Anlagen in einfacher Art und Weise nachgerüstet werden kann, was auch bei Anlagen möglich ist, die aufgrund der bestehenden Konstruktion nur eine geringe Bauhöhe der Schwenkvorrichtung zulassen, was mit den bekannten Lösungen bisher nicht umsetzbar war.

Grundsätzlich besteht die erfindungsgemäße Schwenkvorrichtung aus einer Grundplatte mit Lageraufnahme und Zentrierung, Primärteilen (aktiver Teil vom Motor), die auf der Grundplatte aufgebaut sind, einem Drehteller mit angebauten Sekundärteilen und beispielsweise einem Messband, einer Werkzeugaufnahmeplatte, die mit dem Drehteller verbunden ist, einer steckbaren Energie- und Medienversorgung zur Kommunikation mit der übergeordneten Bearbeitungsanlage, und einer Elektrosteuerung mit speziell entwickelter Software und Produktdatenspeicher für die Schwenkvorrichtung. Die Schwenkvorrichtung berücksichtigt dabei alle relevanten Leistungsdaten, Toleranzen und physikalischen Eigenschaften, wie sie bei Schneidanlagen für Platinen gefordert werden.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Darstellung einer Presse, die mit einer nachgerüsteten Schwenkvorrichtung ausgerüstet ist, auf der oberseitig ein Schneidwerkzeug angeordnet ist, dem von einem Coil eine Materialbahn zum Schneiden von Platinen zugeführt wird,
- Fig. 2a: schematische Draufsicht auf eine Schwenkvorrichtung mit Schneidwerkzeug und zugeführter Materialbahn gemäß Fig. 1,
- Fig. 2b: schematische Draufsicht auf unterschiedlich geschnittene Platinengeometrien, wie gleichschenklige und ungleichschenklige Trapezplatinen, Rauten- und Rechteckplatinen,
- Fig. 3: schematische Draufsicht auf eine erste Ausführungsform einer Schwenkvorrichtung mit Schneidwerkzeug, bei dem der Drehantrieb als stehender Segmentantrieb mit Sekundärund Primärteil ausgebildet ist,
- Fig. 4: schematische Draufsicht auf eine zweite Ausführungsform einer Schwenkvorrichtung mit Schneidwerkzeug, bei dem der Drehantrieb als liegender Segmentantrieb mit Sekundärund Primärteil ausgebildet ist,
- Fig. 5: schematischer Querschnitt durch eine Schwenkvorrichtung gemäß Fig. 4, bei der zwischen der Grundplatte und dem Drehteller der Schwenkvorrichtung eine axiale und radiale hydrostatische Lagervorrichtung vorhanden ist,
- Fig. 6: schematischer Querschnitt durch eine Schwenkvorrichtung gemäß Fig. 4, bei der zwischen der Grundplatte und dem Drehteller der Schwenkvorrichtung eine axiale und radiale Gleitlagervorrichtung vorhanden ist,
- Fig. 7a, b: schematischer Detailquerschnitt durch eine Schwenkvorrichtung gemäß Fig. 3 im Bereich des stehenden Segmentmotors (Fig. 7a) und im Bereich einer Messeinrichtung (Fig. 7b),
- Fig. 8: schematischer Detailquerschnitt durch eine Schwenkvorrichtung mit einer gefederten Axiallagereinrichtung,
- Fig. 9: schematische Detaildraufsicht auf eine Schwenkvorrichtung mit liegendem Segmentmotor und Zuführleitungen für Kühlung und Energie,
- Fig. 10: schematischer Detailschnitt durch eine Schwenkvorrichtung gemäß Fig. 9 und
- Fig. 11: schematischer Detailquerschnitt durch eine Schwenkvorrichtung mit liegendem Segmentmotor im Bereich einer Messeinrichtung.

### WEGE ZUM AUSFÜHREN DER ERFINDUNG

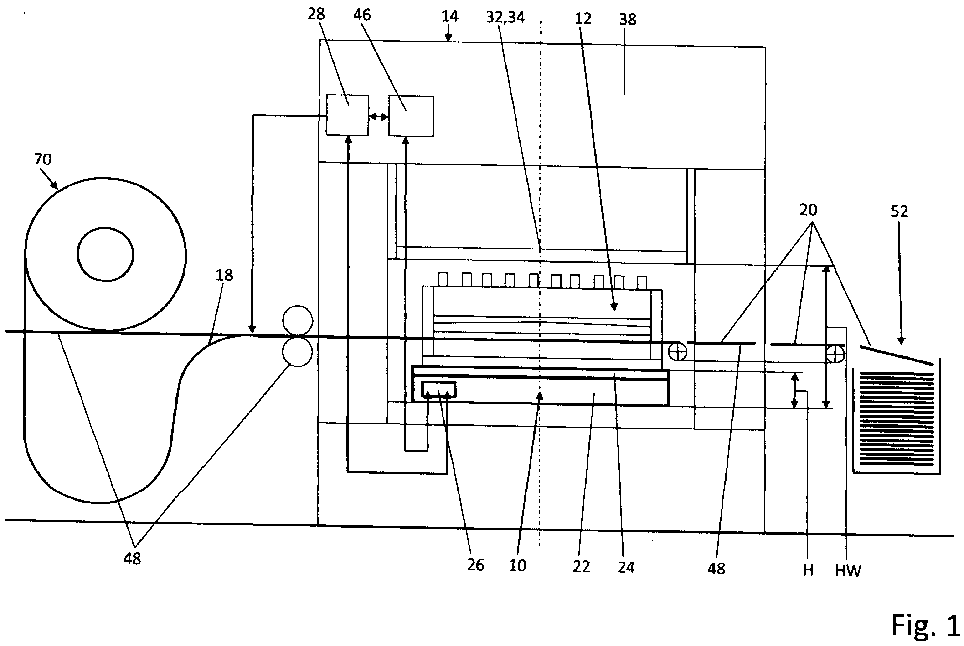

In Fig. 1 ist stark schematisiert eine Presse 14 mit einem Pressentisch 16 und einem Oberbau 38 dargestellt. Auf dem Pressentisch 16 ist eine nachrüstbare, autarke Schwenkvorrichtung 10 angeordnet, die eine feststehende Grundplatteneinrichtung 22 und oberseitig einen drehbar um eine vertikale Schwenkachse 32 drehbaren Drehteller 24 aufweist. Auf der Schwenkvorrichtung 10 ist über eine nicht näher dargestellte Werkzeugaufnahme ein Schneidwerkzeug 12 angeordnet, dessen Schwenkachse 34 in der Schwenkachse 32 des Drehtellers 24 angeordnet ist.

Dem Schneidwerkzeug 12 wird über eine Fördereinrichtung 48 eine von einem Coil 70 abgezogene Materialbahn 18 taktweise zugeführt.

Die Schwenkvorrichtung 10 weist eine Steuereinrichtung 26 auf, die mit der Steuereinrichtung 28 der Presse 14 kommuniziert. Über die Steuereinrichtung 26 des Schwenkwerkzeugs 10 wird der jeweilige gewünschte Schwenkwinkel des Drehtellers 24 und damit des Schneidwerkzeugs 12 relativ zur Materialbahn 18 für jeden Takt eingestellt, wobei die Steuereinrichtung 28 der Presse 14 nach jeden Takt einen Pressenhub durchführt, so dass das Schneidwerkzeug 12 die Materialbahn 18 schneidet.

Die Steuereinrichtung 28 der Presse 14 kommuniziert ebenfalls mit der Fördereinrichtung 48 zur taktweisen Zuführung der Materialbahn 18 zum Schneidwerkzeug 12. Des Weiteren ist eine schematisch dargestellte Energieversorgungseinheit 46 vorhanden, die neben der Presse 14 auch die Schwenkvorrichtung 10 mit elektrischer Energie versorgt.

Nach dem Schneiden der Platinen 20 werden diese in einem Behälter oder einer Stapeleinrichtung 52 gelagert oder über Teleskopbänder in eine Stapeleinrichtung gefördert und dort lagerichtig abgestapelt.

Der lichte Abstand zwischen Pressenoberbau 38 und Pressentisch 16 ist in Fig. 1 mit dem Pfeil HW gekennzeichnet. Die Bauhöhe der Schwenkvorrichtung 10 ist in Fig. 1 mit dem Pfeil H bezeichnet. Erfindungsgemäß können Bauhöhen von 200 mm erzielt werden.

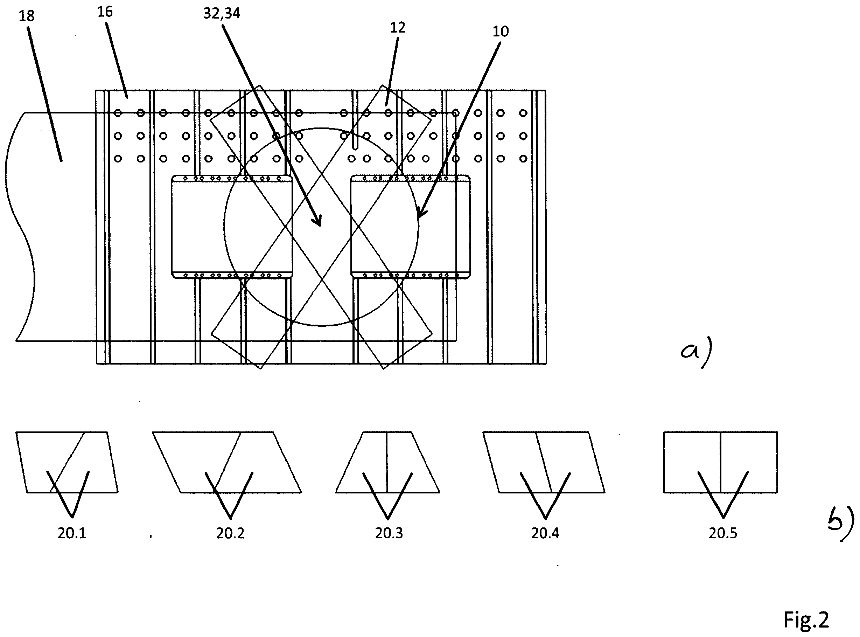

In Fig. 2a ist schematisch eine Draufsicht auf eine Schwenkvorrichtung 10 mit einem darauf angeordneten Schneidwerkzeug 12 dargestellt, dem die Materialbahn 18 taktweise zugeführt wird. Der Drehteller der Schwenkvorrichtung 10 und damit das Schneidwerkzeug 12 ist um einen programmierbaren Schwenkwinkel von im Ausführungsbeispiel bis zu ± 35° schwenkbar ausgebildet zum Schneiden von Trapezplatinen, die in Fig. 2b dargestellt sind, wie gleichschenklige Trapezplatinen 20.1, ungleichschenklige Trapezplatinen 20.2, Rautenplatinen 20.3 oder Rechteckplatinen 20.4.

In Fig. 2a ist das Schneidwerkzeug 12 jeweils in den beiden maximalen Schwenkpositionen dargestellt. Der Schwenkwinkel ist mit dem Doppelpfeil W dargestellt.

Erfindungsgemäß ist der Drehantrieb der Schwenkvorrichtung 10 als Segmentantrieb 30 mit Sekundär- und Primäreinheiten 42, 44 ausgebildet, was weiter unten beschrieben werden wird.

In einem praktischen Ausführungsbeispiel ist die Anlage so ausgebildet, dass bis zu 60 Pressenhübe pro Minute durchgeführt werden, was bedeutet, dass die Schwenkvorrichtung 10 60 Schwenkbewegungen mit maximal 70° pro Minute durchführt. Die Größe der Kassette des Schneidwerkzeugs 12 liegt beispielsweise bei 2200 x 600 x 400 mm. Das Gewicht des Schneidwerkzeugs 12 beträgt in einem Ausführungsbeispiel ca. 1,5 t. Die Schnittkraft wirkt mit 20 t auf die Materialbahn 18 ein. Die Bauhöhe der Schwenkvorrichtung 10 beträgt im Ausführungsbeispiel ca. 200 mm.

Die Schwenkvorrichtung 10 ist als autarke Einheit ausgebildet, das heißt sie kann problemlos an einer bestehenden Presse 14 nachgerüstet werden, so dass mit der Presse 14 Trapezplatinen 20 mit Schrägschnitten hergestellt werden können, was seither bei den bekannten Maschinen nicht möglich war.

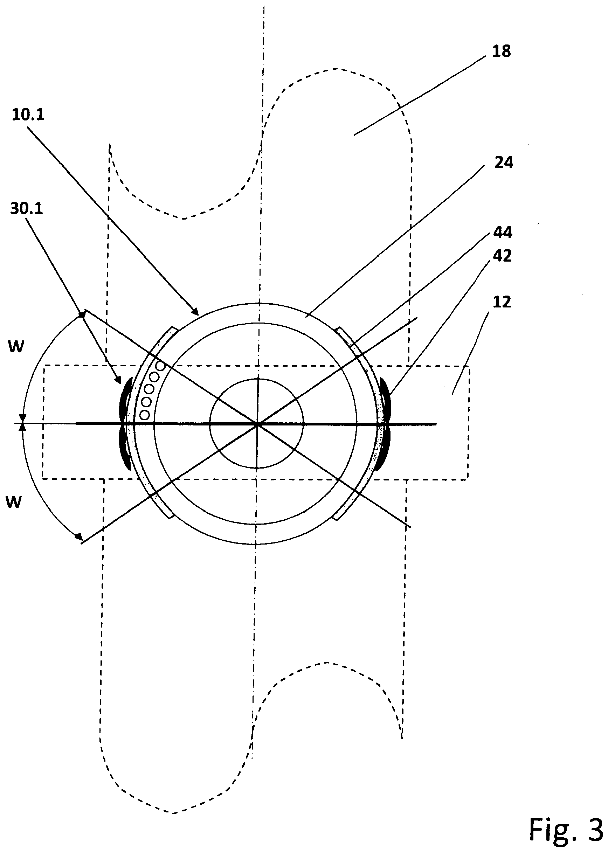

In Fig. 3 ist einer Draufsicht stark schematisiert ein erstes Ausführungsbeispiel einer Schwenkvorrichtung 10.1 dargestellt, bei dem der Drehantrieb 30.1 als stehender Segmentantrieb 30 mit Primäreinheiten 42 (Motor, Stator) und Sekundäreinheiten 44 (Magnete, Rotor) ausgebildet. Der Segmentantrieb 30 ist gegenüberliegend teilkreisförmig angeordnet und ermöglicht bei entsprechender Ansteuerung über die Steuereinrichtung 26 eine taktweise Verschwenkung des Drehtellers 24 um den jeweils vorgegebenen Drehwinkel W.

Der große Vorteil der Verwendung eines Segmentantriebs 30 besteht darin, dass der Antrieb praktisch wartungsfrei ist. Zur Umsetzung der Schwenkbewegung ist keine zusätzliche Mechanik erforderlich. Bis auf ein gewisses Lagerspiel ist das System praktisch spielfrei. Weiterhin ist die Vorrichtung 10 in der Lage, mit hoher Taktfrequenz und hoher Positioniergenauigkeit zu arbeiten. Eventuell wird bei hoher Taktfrequenz eine Wasserkühlung für die Primäreinheiten 42 verwendet.

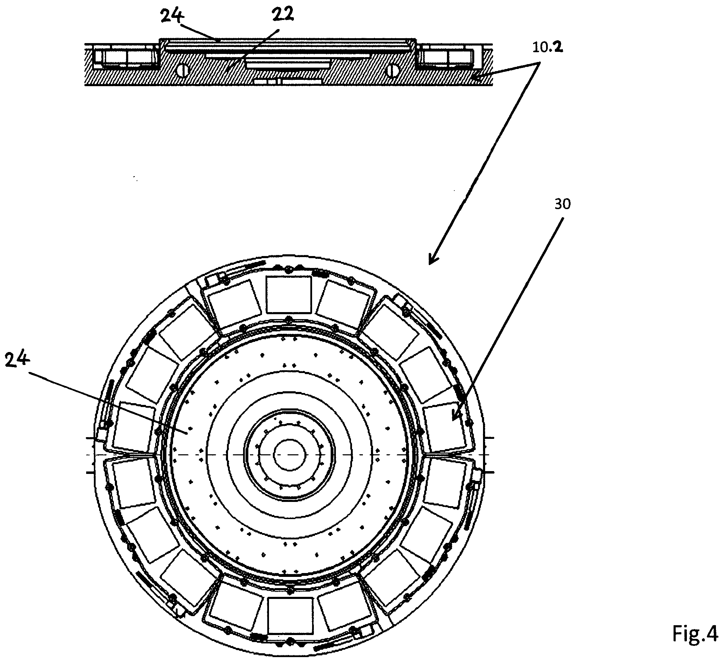

In Fig. 4 ist in einer schematisierten Draufsicht eine zweite Ausführungsvariante einer Schwenkvorrichtung 10.2 dargestellt, bei der der Segmentantrieb 30 in einer liegenden Version ausgebildet ist, was eine besonders geringe Bauhöhe H der gesamten Schwenkvorrichtung 10 ermöglicht.

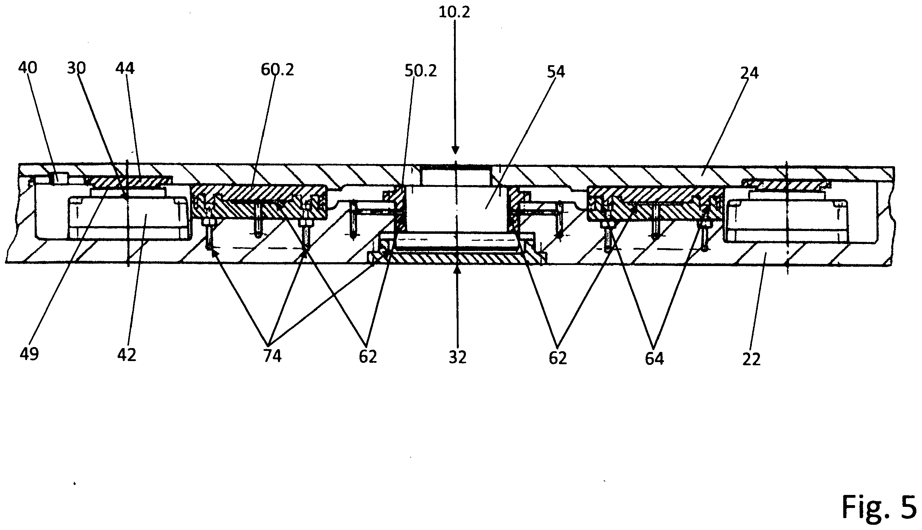

In Fig. 5 ist ein Querschnitt durch die Variante mit liegendem Segmentantrieb gemäß Fig. 4 schematisch dargestellt. Der aus zwei Teilbereichen gegenüberliegende Segmentantrieb 30 weist jeweils eine Primäreinheit 42 (Motor) auf, die auf der Grundplatte 22 der Schwenkvorrichtung 10 in Umfangsrichtung bereichsweise teilkreisförmig angeordnet ist. Unmittelbar über der Primäreinheit 42 sind die Sekundäreinheiten 44 unterseitig an dem Drehteller 24 angeschlossen. Zwischen den Primäreinheit 42 und Sekundäreinheit 44 ist ein Luftspalt 49 vorhanden, es handelt sich somit um eine vollkommen berührungslose Variante.

Im Bereich der Schwenkachse 32 ist unterseitig an dem Drehteller 24 eine Drehtellerzentrierung 54 angeformt, die gegenüber der Grundplatte 22 durch eine Radiallagereinrichtung 50.2 drehbar gelagert ist. Gleichzeitig ist zwischen der Drehtellerzentrierung 54 und dem Segmentantrieb 30 eine Axiallagereinrichtung 60.2 zwischen Drehteller 24 und Grundplatte 22 vorhanden. Sowohl die Radiallagereinrichtung 50.2 als auch die Axiallagereinrichtung 60.2 ist als hydrostatische Lagereinrichtung ausgebildet, das heißt der Drehteller 24 ist über eine Hydraulikölkammer 62 an der Grundplatte 22 schwimmend gelagert. Die Hydraulikölkammer 62 ist über eine Labyrinthdichtungseinrichtung 64 nach außen hin abgedichtet, an die ein Leckölkanalsystem 74 angeschlossen ist.

In Fig. 5 ist im linken Randbereich eine Messeinrichtung 40 dargestellt, die mit der Steuereinrichtung 26 der Schwenkvorrichtung 10 kommuniziert und die jeweilige Schwenkposition des Drehtellers 24 relativ zur Grundplatte 22 detektiert.

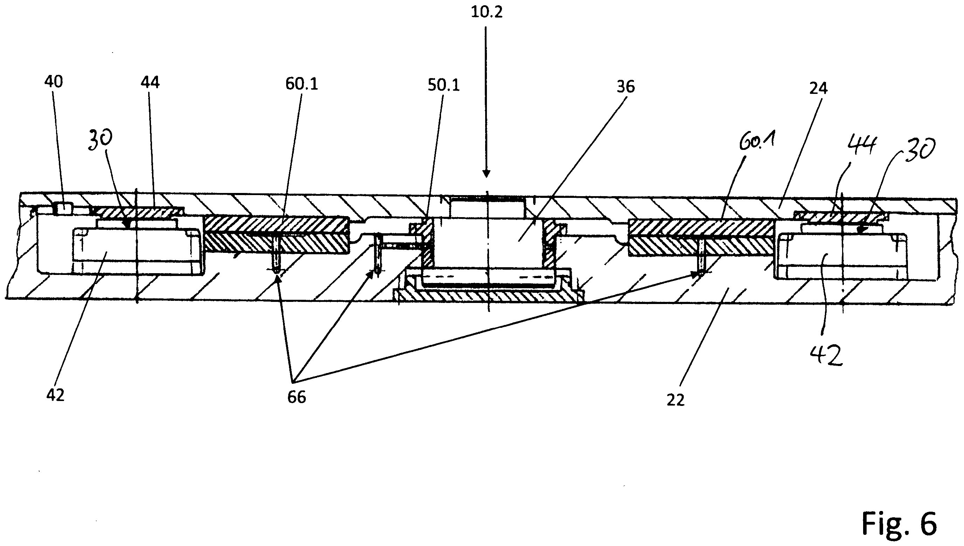

Die in Fig. 6 schematisch im Querschnitt dargestellte Schwenkvorrichtung 10.2 unterscheidet sich von der Schwenkvorrichtung 10.2 in Fig. 5 darin, dass als Radiallagereinrichtung 50.1 und Axiallagereinrichtung 60.1 eine Gleitlagereinrichtung mit Schmierung 66 eingesetzt wird. Gleiche Bauteile tragen dasselbe Bezugszeichen und werden nicht nochmals erläutert. Auch hier wird die Schwenkbewegung über die Ansteuerung eines liegenden Segmentantriebs umgesetzt.

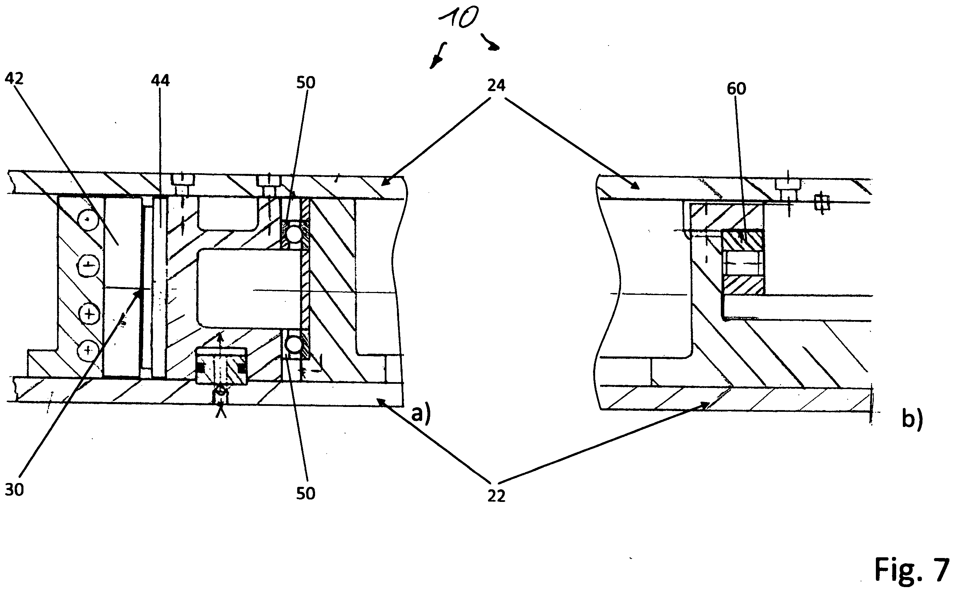

Die Fig. 7a und 7b zeigen Detailquerschnitte der Schwenkvorrichtung 10 mit stehendem Segmentantrieb 30 (Primäreinheit 42 und Sekundäreinheit 44), bei der die Radiallagereinrichtung 50 als Kugellager und Axiallagereinrichtung 60 als Wälzlager ausgebildet ist.

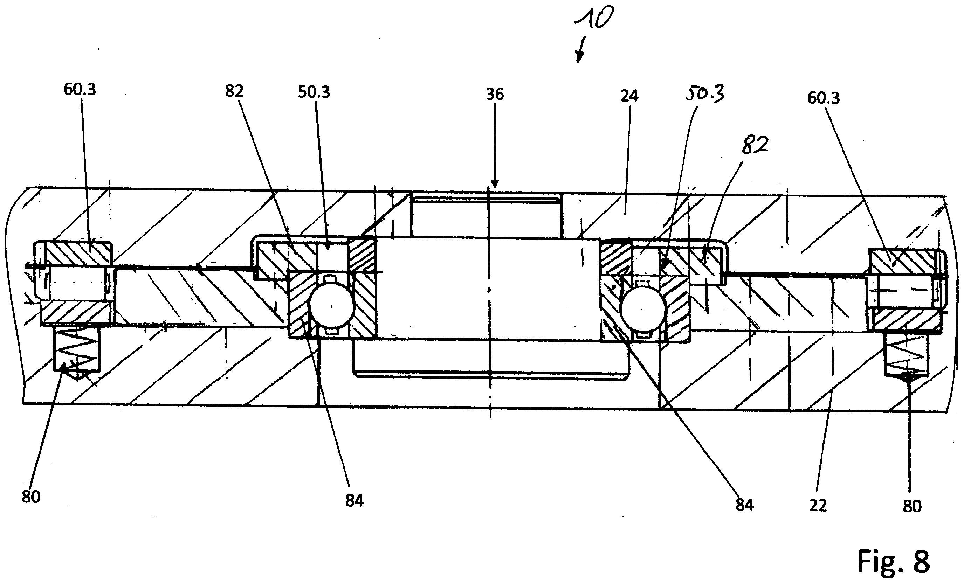

In Fig. 8 ist eine Ausführungsvariante dargestellt, bei der Axiallagereinrichtung als Rollenkugellagereinrichtung 82 ausgebildet ist, die unterseitig von einer Federeinheit 80 beaufschlagt wird. Die auf die Axiallagereinrichtung 60.3 einwirkende Federkraft ist dabei so eingestellt, dass sie ihre Größe nach der Magnetkraft zuzüglich dem Gewicht des Schneidwerkzeugs zuzüglich einem Zuschlag von 10 % beträgt. Die Radiallagereinrichtung 50.3 weist oberseitig einen Haltering 82 auf, der die unterseitige Schrägkugellagereinrichtung 84 hält. Durch die Federkraft der Federeinheit 80 wird die Axiallagereinrichtung 60 angehoben. Dadurch wird der Drehteller 24 mit dem aufgebauten Schneidwerkzeug nach dem Schwenken nicht auf das Lager sondern auf eine feste Unterlage an der Grundplatte 22 abgesenkt, was den Vorteil hat, dass beim Schwenken gegenüber der Gleitlagerung kaum Reibungskräfte entstehen und nur die reine Masse beschleunigt und abgebremst werden muss. Weiterhin werden die Reaktivkräfte, die beim Schneiden auf den Antrieb wirken durch Reibschluss verringert, so dass das Haltemoment des Antriebs reduziert wird.

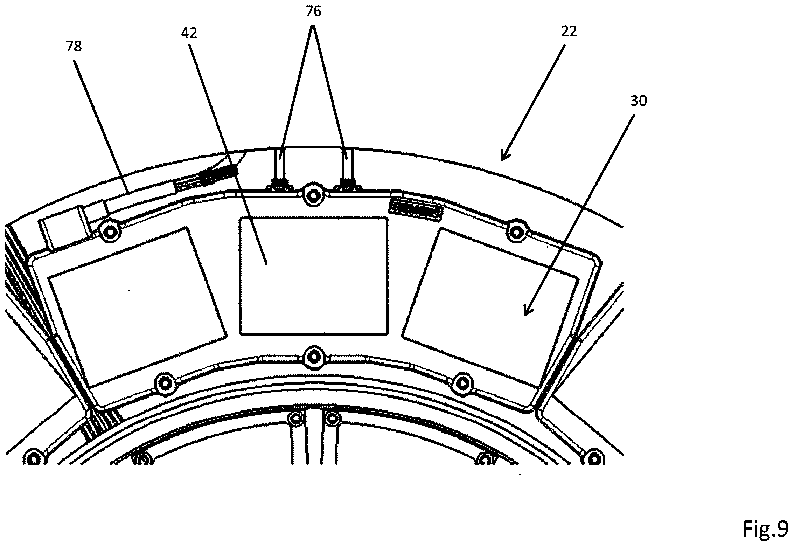

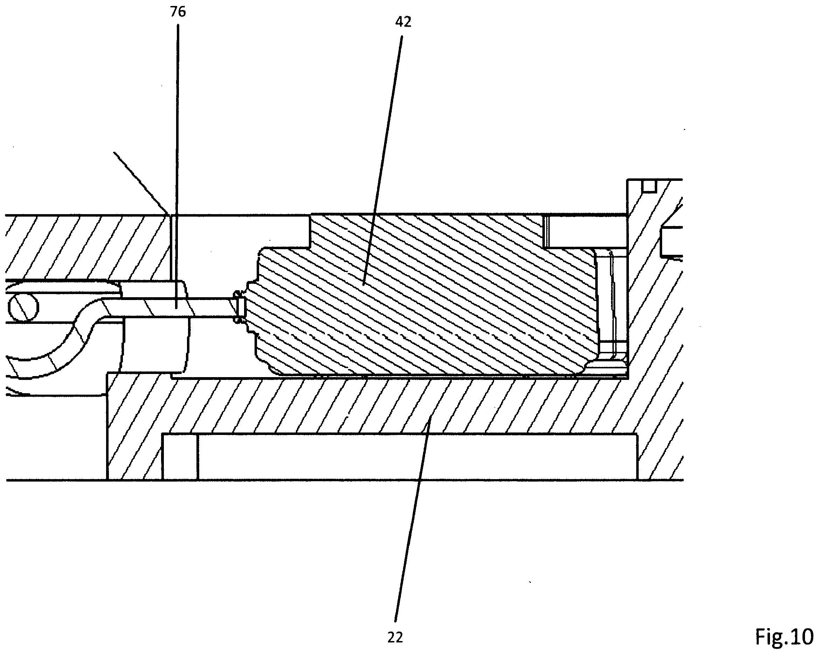

Die Figuren 9 und 10 zeigen in Detailausschnitten die Zuführung von Kühlleitungen 76 sowie Energieversorgungsleitungen 78 zu dem Segmentantrieb 30. Die Anschlüsse sind dabei bevorzugt als Schnellkupplung ausgebildet.

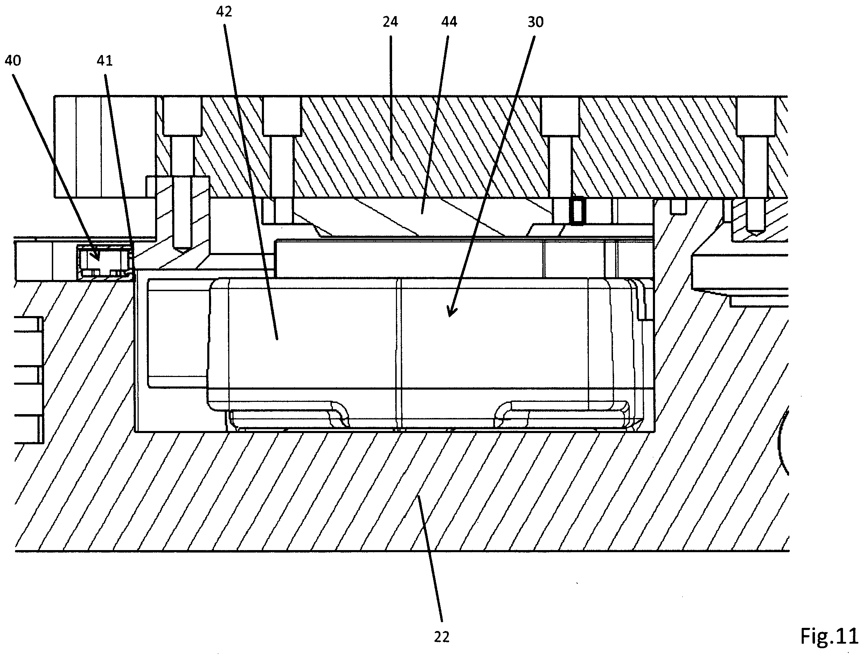

Fig. 11 zeigt einen Detailquerschnitt im Randbereich des Drehtellers 24 bei einem Segmentantrieb in liegender Position und einer Messeinrichtung 40 zum Detektieren der jeweiligen Schwenkposition des Drehtellers 24. Innerhalb der Messeinrichtung 40 ist unterseitig an dem Drehteller ein Messring 41 mit einem außen umfangsmäßig angeordneten Messband 43 vorhanden.

Auf der Grundplatte 22 ist über eine Konsole 45 ein Messkopf 47 angeschlossen, der das sich beim Schwenkvorgang bewegende Messband 43 abtastet und entsprechende Signale an die Steuereinrichtung 26 sendet.

Durch die erfindungsgemäße Implementierung eines Segmentantriebs 30 sowohl in der stehenden als auch in der liegenden Variante kann eine niedrige Bauweise bei großer Dynamik und Präzession umgesetzt werden. Insbesondere bei relativ großen Durchmesser beispielsweise bei über 1 Meter, des Drehtellers bringt der Segmentantrieb zusätzlich wirtschaftliche Vorteile mit sich, und zeichnet sich insbesondere durch seine Wartungsfreundlichkeit aus.

Durch den Einsatz eines Segmentantriebs lässt sich eine hochdynamische antriebsstarke, energieeffiziente und wartungsarme Schwenkvorrichtung mit hoher Positioniergenauigkeit und der Erzielung hoher Taktfrequenzen umsetzen, die sich durch eine einfache Bauweise auszeichnet und eine dauerhaft zuverlässige Funktionalität gewährleistet. Die Präzision wird durch das eingesetztes integrierte berührungslose Messsystem weiter verbessert.

Der Einau eines Segmentantriebs ermöglicht eine Schwenkeinrichtung herzustellen, die vollkommen autark funktionsfähig ist.

Zusammenfassend sind folgende wesentliche Vorteile durch den Einsatz des Segmentantriebs mit Sekundär- und Primäreinheiten gegeben:
- Der Antrieb ist praktisch wartungsfrei.
- Es werden nur wenige Bauteile benötigt.
- Es ist keine zusätzliche Mechanik (zum Beispiel Zahnräder) erforderlich.
- Der Antrieb ist praktisch nicht störanfällig und nahezu spielfrei.
- Darüber hinaus zeichnet sich der Antrieb durch eine Montagefreundlichkeit aus.

Durch die autarke Ausbildung der Schwenkvorrichtung kann diese problemlos an bestehenden Bearbeitungsmaschinen, wie beispielsweise Pressen, bedarfsweise nachgerüstet werden, so dass mit diesen Pressen Trapezplatinen mit schrägen Schnitten mit unterschiedlichster Schnittwinkelgestaltung im Bedarfsfall in einfacher Art und Weise hergestellt werden können. Dadurch können bestehende Anlagen flexibler und damit wirtschaftlicher genutzt werden.

Die Schwenkeinrichtung kann auch im 360° Betrieb arbeiten, so dass auch der Einsatz als Rundachse (Rundtisch usw.) in Frage kommt.

## Patentansprüche

1. Schwenkvorrichtung (10) für ein Schneidwerkzeug (12) einer Bearbeitungsmaschine, insbesondere einer Presse (14), Scherenanlage oder dergleichen Schneidanlage, zum Herstellen von Platinen (20.1, 20.2, 20.3 ...) von einer Materialbahn (18) beziehungsweise Coil, die/das der Schwenkvorrichtung (10) beziehungsweise dem Schneidwerkzeug (12) taktweise zuführbar ist, mit
- einer feststehenden Grundplatteneinrichtung (22),
- einem auf der Grundplatteneinrichtung (22) um eine Schwenkachse (32) drehbar angeordneten Drehteller (24) auf dem das Schneidwerkzeug (12), insbesondere über eine Werkzeugaufnahmeeinrichtung anschließbar ist,
- einer Lagervorrichtung zum drehbaren Lagern des Drehtellers (24) auf der Grundplatteneinrichtung (22),
- einem Drehantrieb (30) für den Drehteller (24),
- einer Steuereinrichtung (26), die mit dem Drehantrieb (30) kommuniziert zur Einstellung der Betriebskennwerte der Schwenkvorrichtung wie Drehwinkel (W) des Drehtellers, Drehgeschwindigkeit usw. für den jeweiligen Schwenkvorgang des Schneidwerkzeugs (12) nach jedem Zuführtakt der Materialbahn (18),
- wobei der Drehantrieb (30) als Linear-/Segmentmotor mit Primäreinheiten (42) beziehungsweise Motoreinheit und Sekundäreinheiten (44) beziehungsweise Magneteinheiten ausgebildet ist,
- **dadurch gekennzeichnet, dass**
- die Primär- und Sekundäreinheiten (42,44) liegend angeordnet sind,
- die Primäreinheiten (42) an der Grundplatteneinrichtung (22) und die Sekundäreinheiten an dem Drehteller (24) angeordnet sind,
- die Lagervorrichtung eine Axiallagereinrichtung (60.1, 60.2) und eine Radiallagereinrichtung (50.1,50.2) aufweist,
- die Lagervorrichtung (50.1, 60.1) als hydrostatische Lagervorrichtung
oder
die Lagervorrichtung als Gleitlagervorrichtung oder als Wälz-/Kugellagervorrichtung ausgebildet ist, wobei eine gefederte Hubeinrichtung vorhanden ist, die die Axiallagereinrichtung während des Schwenkvorgangs anhebt und nach dem Schwenkvorgang, das heißt beim Schneidvorgang, auf einer festen Unterlage absetzt.

2. Schwenkvorrichtung nach Anspruch 1,
- **dadurch gekennzeichnet, dass**
- die Schwenkvorrichtung (10) um eine vertikale Schwenkachse (32) drehbar ausgebildet ist und die Schwenkachse (32) im Wesentlichen in der Schwenkachse (34) des Schneidwerkzeugs (12) angeordnet ist.

3. Schwenkvorrichtung nach Anspruch 1,
- **dadurch gekennzeichnet, dass**
- Dichteinrichtungen für die Axial- und/oder Radiallagereinrichtung vorhanden sind.

4. Schwenkvorrichtung nach Anspruch 1,
- **dadurch gekennzeichnet, dass**
- eine berühungslose Labyrinth-Dichteinrichtung vorhanden ist, die die Abdichtung der Axial- und/oder Radiallagereinrichtung gewährleistet.

5. Schwenkvorrichtung nach Anspruch 1, 3 oder 4,
- **dadurch gekennzeichnet, dass**
- ein PM-Regler (Progressiv Mengen -Regler) vorhanden ist, der den hydrostatischen Spalt zwischen Axial-/Radiallagereinrichtung und Drehteller konstant hält.

6. Schwenkvorrichtung nach einem oder mehreren der vorstehenden Ansprüche,
- **dadurch gekennzeichnet, dass**
- der Schwenkwinkel (W) der Schwenkvorrichtung (10) im Bereich von ± 40° (Altgrad) und kleiner liegt.

7. Schwenkvorrichtung nach einem oder mehreren der vorstehenden Ansprüche,
- **dadurch gekennzeichnet, dass**
- die Schwenkvorrichtung (10) eine Messeinrichtung (40) aufweist, die die Drehposition des Drehtellers (24) relativ zur Grundplatteneinrichtung (22) und damit die Drehposition des Schneidwerkzeugs (12) detektiert und ihre Signale mit der Steuereinrichtung kommuniziert.

8. Schwenkvorrichtung nach einem oder mehreren der vorstehenden Ansprüche,
- **dadurch gekennzeichnet, dass**
- eine Kühleinrichtung, insbesondere Wasserkühlereinrichtung, für die Primäreinheiten (42) vorhanden ist.

9. Schwenkvorrichtung nach einem oder mehreren der vorstehenden Ansprüche,
- **dadurch gekennzeichnet, dass**
- die Bauhöhe (H) der Schwenkvorrichtung (10) kleiner als 200 mm (Millimeter) ist.

10. Schwenkvorrichtung nach einem oder mehreren der vorstehenden Ansprüche,
- **dadurch gekennzeichnet, dass**
- die Steuereinrichtung den Linear-/Segmentmotor mit einer Schwenkfrequenz von mindestens 60 Hz (Hertz) oder kleiner oder größer ansteuert.

11. Schwenkvorrichtung nach einem oder mehreren der vorstehenden Ansprüche,
- **dadurch gekennzeichnet, dass**
- die Schwenkvorrichtung (10) als autarke Einheit ausgebildet ist, die an einer bestehenden Bearbeitungsmaschine (14) nachrüstbar, das heißt montier- und demontierbar, ausgebildet ist.

12. Schwenkvorrichtung nach einem oder mehreren der vorstehenden Ansprüche,
- **dadurch gekennzeichnet, dass**
- die Schwenkvorrichtung (10) über zumindest eine lösbare Verbindungseinheit mit der Steuereinrichtung und/oder Energieversorgungseinrichtung der Bearbeitungsmaschine kommunizierbar beziehungsweise verbindbar ausgebildet ist.

13. Bearbeitungsmaschine /-werkzeug /-anlage, wie Presse (14), Schneidanlage, Scherenanlage, zum Schneiden von anschließend zu bearbeitenden Platinen aus einer zugeführten Materialbahn, mit Mitteln zum Zuführen beziehungsweise Abführen einer Materialbahn aus der die Platinen geschnitten werden,
- **dadurch gekennzeichnet, dass**
- eine nachrüstbare, das heißt montier- und demontierbare, autarke Schwenkvorrichtung (10) nach einem oder mehreren der vorstehenden Ansprüche vorhanden ist, auf der ein Schneidwerkzeug (12) zum Schneiden von Platinen (20.1, 20.2 ...) aus der zugeführten Materialbahn (18) angeordnet ist.

14. Bearbeitungsmaschine nach Anspruch 13,
- **dadurch gekennzeichnet, dass**
- die Schwenkvorrichtung (10) als autarke, lösbar an der Bearbeitungsmaschine (14) montierbare und demontierbare Vorrichtung ausgebildet ist, die mit der Bearbeitungsmaschine kommunizierbar ausgebildet ist.

15. Bearbeitungsmaschine nach Anspruch 13 oder 14,
- **dadurch gekennzeichnet, dass**
- die Schwenkvorrichtung (10) oberseitig eine Werkzeugaufnahmeeinrichtung zum lösbaren Anschluss eines Schneidwerkzeugs (12) aufweist.

16. Bearbeitungsmaschine nach einem oder mehreren der Ansprüche 13 bis 15,
- **dadurch gekennzeichnet, dass**
- die Schwenkvorrichtung (10) zumindest eine lösbar, insbesondere steckbare, Verbindungseinrichtung aufweist zum Herstellen einer Kommunikationsverbindung mit der übergeordneten Steuerung der Bearbeitungsmaschine (14) und/oder der Energieversorgung der Bearbeitungsmaschine (14).

## Claims

1. Pivoting device (10) for a cutting tool (12) of a processing machine, in particular of a press (14), a shear press, or a similar cutting plant, for producing blanks (20.1, 20.2, 20.3...) from a material web (18) or a coil, respectively, which is feedable to the pivoting device (10) or to the cutting tool (12), respectively, in cyclical manner, comprising:
- a stationary base-plate installation (22);
- a rotary table (24) that is disposed so as to be rotatable about a pivot axis (32) on the base-plate installation (22), the cutting tool (12) being connectable to said rotary table (24) in particular by way of a tool receptacle installation;
- a bearing device for bearing the rotary table (24) so as to be rotatable on the base-plate installation (22);
- a rotary drive (30) for the rotary table (24);
- a control installation (26) which for setting the operating parameters of the pivoting device, such as the rotary angle (W) of the rotary table, the rotating speed, etc., for the respective pivoting procedure of the cutting tool (12) communicates with the rotary drive (30) after each feeding cycle of the material web (18);
- wherein the rotary drive (30) is configured as a linear motor/segment motor having primary units (42) or a motor unit, respectively, and secondary units (44) or magnet units, respectively;
**characterized in that**
- the primary units and secondary units (42, 44) are disposed in a horizontal manner;
- the primary units (42) are disposed on the base-plate installation (22), and the secondary units are disposed on the rotary table (24);
- the bearing device has an axial bearing installation (60.1, 60.2) and a radial bearing installation (50.1, 50.2);
- the bearing device (50.1, 60.1) is configured as a hydrostatic bearing device
or
the bearing device is configured as a friction bearing device or as a roller/ball bearing device, wherein a sprung lifting installation which raises the axial bearing installation during the pivoting procedure and after the pivoting procedure, that is to say in the cutting procedure, lands said axial bearing installation on a fixed support face, is provided.

2. Pivoting device according to Claim 1,
**characterized in that** the pivoting device (10) is configured so as to be rotatable about a vertical pivot axis (32), and the pivot axis (32) is disposed substantially in the pivot axis (34) of the cutting tool (12).

3. Pivoting device according to Claim 1,
**characterized in that** sealing installations are provided for the axial and/or the radial bearing installation.

4. Pivoting device according to Claim 1,
**characterized in that** a non-contacting labyrinth sealing installation which guarantees the sealing of the axial and/or the radial bearing installation is provided.

5. Pivoting device according to Claim 1, 3, or 4,
**characterized in that** a PQ controller (progressive quantity controller) which keeps the hydrostatic gap between the axial/radial bearing installation and the rotary table constant is provided.

6. Pivoting device according to one or a plurality of the preceding claims,
**characterized in that** the pivoting angle (W) of the pivoting device (10) is in the range of ± 40° (degrees) and less.

7. Pivoting device according to one or a plurality of the preceding claims,
**characterized in that** the pivoting device (10) has a measuring installation (40) which detects the rotary position of the rotary table (24) relative to the base-plate installation (22), and thus the rotary position of the cutting tool (12), said measuring installation (40) communicating the signals thereof to the control installation.

8. Pivoting device according to one or a plurality of the preceding claims,
**characterized in that** a cooling installation, in particular a water cooling installation, is provided for the primary units (42).

9. Pivoting device according to one or a plurality of the preceding claims,
**characterized in that** the installation height (H) of the pivoting device (10) is less than 200 mm (millimetres).

10. Pivoting device according to one or a plurality of the preceding claims,
**characterized in that** the control installation, actuates the linear motor/segment motor at a pivoting frequency of at least 60 Hz (Hertz) or less or more.

11. Pivoting device according to one or a plurality of the preceding claims,
**characterized in that** the pivoting device (10) is configured as an autonomous unit which is configured so as to be retrofittable to an existing processing machine (14), that is to say capable of being fitted to and dismantled from the latter.

12. Pivoting device according to one or a plurality of the preceding claims,
**characterized in that** the pivoting device (10) by way of at least one releasable connection unit is configured so as to be capable of communication with or connection to the control installation and/or the power supply installation of the processing machine.

13. Processing machine/tool/plant, such as a press (14), a cutting plant, a shear press, for cutting blanks to be subsequently processed from an infed material web, having means for feeding or discharging, respectively, a material web from which the blanks are cut,
**characterized in that** an autonomous pivoting device (10) that is retrofittable, that is to say that is capable of being fitted and dismantled, according to one or a plurality of the preceding claims is provided, a cutting tool (12) for cutting blanks (20.1, 20.2, ...) from the infed material web (18) being disposed on said pivoting device (10).

14. Processing machine according to Claim 13,
**characterized in that** the pivoting device (10) is configured as an autonomous device that is capable of being fitted to and dismantled from the processing machine (14) in a releasable manner and is configured so as to be capable of communication with the processing machine.

15. Processing machine according to Claim 13 or 14,
**characterized in that** the pivoting device (10) on the upper side has a tool receptacle installation for releasably connecting a cutting tool (12).

16. Processing machine according one or a plurality of Claims 13 to 15,
**characterized in that** the pivoting device (10) has at least one releasable, preferably plug-fittable, connection installation for establishing a communications connection to the superordinate controller of the processing machine (14) and/or of the power supply of the processing machine (14).

## Revendications

1. Dispositif de pivotement (10) pour un outil de coupe (12) d'une machine d'usinage, en particulier d'une presse (14), d'une installation de cisaillement ou d'une installation de coupe similaire, pour la fabrication de platines (20.1, 20.2, 20. 3...) d'une bande de matériau (18) ou d'une bobine, qui peut être acheminée au dispositif de pivotement (10) ou à l'outil de coupe (12) de manière cadencée, comprenant
- un dispositif de plaque de base fixe (22),
- un plateau tournant (24) disposé de manière à pouvoir tourner autour d'un axe de pivotement (32) sur le dispositif de plaque de base (22), sur lequel peut être raccordé l'outil de coupe (12), en particulier par le biais d'un dispositif porte-outil,
- un dispositif de palier pour supporter de manière rotative le plateau tournant (24) sur le dispositif de plaque de base (22),
- un entraînement en rotation (30) pour le plateau tournant (24),
- un dispositif de commande (26) qui communique avec l'entraînement en rotation (30) pour ajuster les valeurs caractéristiques de fonctionnement du dispositif de pivotement, telles que l'angle de rotation (W) du plateau tournant, la vitesse de rotation etc. pour l'organe de pivotement respectif de l'outil de coupe (12) après chaque course d'alimentation de la bande de matériau (18),
- l'entraînement en rotation (30) étant réalisé sous forme de moteur linéaire/segmenté avec des unités primaires (42), respectivement une unité de moteur et des unités secondaires (44), respectivement des unités magnétiques, **caractérisée en ce que**
- les unités primaires et secondaires (42, 44) sont disposées couchées,
- les unités primaires (42) sont disposées sur le dispositif de plaque de base (22) et les unités secondaires sont disposées sur le plateau tournant (24),
- le dispositif de palier présente un dispositif de palier axial (60.1, 60.2) et un dispositif de palier radial (50.1, 50.2),
- le dispositif de palier (50.1, 60.1) est réalisé sous forme de dispositif de palier hydrostatique ou
le dispositif de palier est réalisé sous forme de dispositif de palier lisse ou sous forme de dispositif de palier à roulement/roulement à billes, un dispositif de levage à suspension étant prévu, lequel soulève le dispositif de palier axial pendant l'opération de pivotement et, après l'opération de pivotement, c'est-à-dire lors de l'opération de coupe, le dépose sur un support fixe.

2. Dispositif de pivotement selon la revendication 1,
- **caractérisé en ce que**
- le dispositif de pivotement (10) est réalisé de manière à pouvoir tourner autour d'un axe de pivotement vertical (32) et l'axe de pivotement (32) est disposé essentiellement dans l'axe de pivotement (34) de l'outil de coupe (12).

3. Dispositif de pivotement selon la revendication 1,
- **caractérisé en ce que**
- des dispositifs d'étanchéité sont prévus pour le dispositif de palier axial et/ou radial.

4. Dispositif de pivotement selon la revendication 1,
- **caractérisé en ce**
- **qu'**un dispositif d'étanchéité à labyrinthe sans contact est prévu, lequel garantit l'étanchéité du dispositif de palier axial et/ou radial.

5. Dispositif de pivotement selon la revendication 1, 3 ou 4,
- **caractérisé en ce**
- **qu'**un régulateur PM (régulateur de quantité progressif) est prévu, lequel maintient constante la fente hydrostatique entre le dispositif de palier axial/radial et le plateau tournant.

6. Dispositif de pivotement selon l'une quelconque ou plusieurs des revendications précédentes,
- **caractérisé en ce que**
- l'angle de pivotement (W) du dispositif de pivotement (10) est situé dans une plage de ±40° (degrés) et inférieure.

7. Dispositif de pivotement selon l'une quelconque ou plusieurs des revendications précédentes,
- **caractérisé en ce que**
- le dispositif de pivotement (10) présente un dispositif de mesure (40) qui détecte la position de rotation du plateau tournant (24) par rapport au dispositif de plaque de base (22) et ainsi la position de rotation de l'outil de coupe (12) et qui communique ses signaux avec le dispositif de commande.

8. Dispositif de pivotement selon l'une quelconque ou plusieurs des revendications précédentes,
- **caractérisé en ce**
- **qu'**un dispositif de refroidissement, en particulier un dispositif de refroidissement à eau, est prévu pour les unités primaires (42).

9. Dispositif de pivotement selon l'une quelconque ou plusieurs des revendications précédentes,
- **caractérisé en ce que**
- la hauteur de construction (H) du dispositif de pivotement (10) est inférieure à 200 mm (millimètres).

10. Dispositif de pivotement selon l'une quelconque ou plusieurs des revendications précédentes,
- **caractérisé en ce que**
- le dispositif de commande commande le moteur linéaire/segmenté avec une fréquence de pivotement d'au moins 60 Hz (hertz) ou inférieure ou supérieure.

11. Dispositif de pivotement selon l'une quelconque ou plusieurs des revendications précédentes,
- **caractérisé en ce que**
- le dispositif de pivotement (10) est réalisé sous forme d'unité autarcique qui peut être équipée en rattrapage, c'est-à-dire qui peut être montée et démontée sur une machine d'usinage existante (14).

12. Dispositif de pivotement selon l'une quelconque ou plusieurs des revendications précédentes,
- **caractérisé en ce que**
- le dispositif de pivotement (10) est réalisé de manière à pouvoir communiquer ou à pouvoir être connecté par le biais d'au moins une unité de connexion amovible avec le dispositif de commande et/ou le dispositif d'alimentation en énergie de la machine d'usinage.

13. Machine/outil/installation d'usinage, par exemple une presse (14), une installation de coupe, une installation de cisaillement, pour couper des platines devant ensuite être usinées à partir d'une bande de matériau acheminée, comprenant des moyens pour acheminer, respectivement évacuer une bande de matériau à partir de laquelle les platines sont coupées,
- caractérisé(e) en ce
- qu'un dispositif de pivotement autarcique (10) pouvant être monté en rattrapage, c'est-à-dire pouvant être monté et démonté, selon l'une quelconque ou plusieurs des revendications précédentes est prévu, sur lequel est disposé un outil de coupe (12) pour couper des platines (20.1, 20.2...) à partir de la bande de matériau acheminée (18).

14. Machine d'usinage selon la revendication 13,
- **caractérisée en ce que**
- le dispositif de pivotement (10) est réalisé sous forme de dispositif autarcique, pouvant être monté et démonté de manière amovible sur la machine d'usinage (14), qui est réalisé de manière à pouvoir communiquer avec la machine d'usinage.

15. Machine d'usinage selon la revendication 13 ou 14,
- **caractérisée en ce que**
- le dispositif de pivotement (10) présente du côté supérieur un dispositif porte-outil pour le raccordement amovible d'un outil de coupe (12).

16. Machine d'usinage selon l'une quelconque ou plusieurs des revendications 13 à 15,
- **caractérisée en ce que**
- le dispositif de pivotement (10) présente au moins un dispositif de connexion amovible, en particulier enfichable, pour établir une liaison de communication avec la commande principale de la machine d'usinage (14) et/ou de l'alimentation en énergie de la machine d'usinage (14).
